# EUROPEAN PATENT APPLICATION

(11) **EP 0 872 792 A2**
(43) Date of publication of application: **21.10.1998**
(21) Application number: 98302418.3
(22) Date of filing: 30.03.1998
(51) Int. Cl.: G06F 3/12

(54) **Network communication with printing systems**

(30) Priority: 17.04.1997 US 840894; 05.09.1997 US 932790
(71) Applicant: Adobe Systems, Inc., San Jose, California 95110 (US)
(72) Inventor: Durham, Ivor, Los Altos, California 94022 (US); Gaffney, John, Los Gatos, California 95030 (US); Saxe, Norin, Los Gatos, California 95032 (US); King, James C., San Jose, California 95123 (US)
(74) Representative: Wombwell, Francis

(57) **Abstract**

A method for a user machine to communicate with a printing system over a network by determining a URL address for a printing system and transmitting information to the URL address for printing a file at the printing system. The printing system may receive or retrieve files for printing, and also may provide status information to the user machine.

## Description

### Background

The invention relates to communications in printing systems over networks such as the World Wide Web (web).

To print a file, a user typically launches an appropriate application for opening the file and selects a printing system that is locally connected, either directly or through a local area network (LAN). The application (or a printer driver) processes the file into a format compatible with the specified printing system and sends the processed file to the printing system using the appropriate protocol.

Printing can be a memory and CPU intensive task. A user is generally limited to locally connected printing systems, and the user's software must be configured to provide the appropriate file format and communication protocol for the selected printing system.

### Summary

In general, in one aspect, the invention features a method for a user machine to communicate with a printing system over a network by determining a URL address for the printing system and transmitting information to the URL address for printing a file at the printing system.

Certain implementations of the invention include one or more of the following features. The method transmits the file to the URL address. The method further includes opening a file in an application and transmitting information for printing the opened file. The method transmits formatting information to the URL address.

The method transmits information to the URL addresses using a browser. Such information may be the URL address for the file to be printed at the printing system.

The method further includes receiving a job submission form, specifying, in the job submission form, information for the file to be printed, and transmitting the job submission form to the URL address of the printing system. The information specified in the job submission form may include file identification, which may be, for example, a URL address for the file. The method may further include retrieving the file identified in the job submission form and transmitting the retrieved file to the URL address of the printing system.

The network over which the user machine communicates with the printing system may comprises the World Wide Web. The printing system may be housed within a single device such as a printer.

In general, in another aspect, the invention features a method for a printing system to retrieve a file for printing by receiving a request to print a file identified by a URL address, retrieving the file from the URL address, and printing the file.

Certain implementations of the invention include one or more of the following features. The method further includes receiving a print request from a user machine, transmitting a job submission form to the user machine in response to the received print request, and receiving a completed job submission form from the user machine including the URL address of a file to be printed.

The print request may be received over a direct connection, a local area network connection, or over the World Wide Web.

The method may retrieve the file over a direct connection, over a local area network connection, or over the World Wide Web.

The printing system may comprises a single device, such as a printer, or may comprise a first component for retrieving the file from the URL address and a separately housed second component for printing the file.

In general, in another aspect, the invention features a printing system for communicating with users over a network, including a remote I/O interface including a server identified by a URL address for communicating with users over a network and an output system connected to the remote I/O interface, for printing files in response to communications received by the remote I/O interface.

Certain implementations of the invention include one or more of the following features. The remote I/O interface receives a file over the network, and the output system prints the received file. The remote I/O interface further includes a client for retrieving a file over the network. For example, the client retrieves files in response to communications received by the remote I/O interface. The printing system further includes a local I/O interface, wherein the client retrieves files in response to communications received by the local I/O interface. The output system prints files retrieved by the client.

The remote I/O interface further includes a translator for translating files before the output system prints the file.

The printing system further includes a status database for storing status information for the output system, and the remote I/O interface provides information from the status database over the network.

The network over which the printing system communicates with users is the World Wide Web (web) and the remote I/O interface provides information from the status database by posting a web page.

The remote I/O interface provides information from the status database in response to a query received from a user over the network. The printing system further includes a local I/O interface for providing information from the status database.

The remote I/O interface and the output system may comprise separately housed units or may be comprised of a single unit such as a printer.

Among the advantages of the invention are one or more of the following. Enabling a user to print at printing systems accessible over the web enlarges the universe of available printing systems. Further, users may access a printing system having a web server using a traditional search engine. Enabling a user to send a file for printing or to check the status of a print job for the file without opening the file in an application conserves resources including time, processing power, and memory at the user's end. Transmission of a file over the web uses a common communication protocol for sending and receiving the file.

Other features and advantages of the invention will become apparent from the following description and from the claims.

### Brief Description of the Drawings

Figure 1 is a block diagram of a web printing system in accordance with the invention.

Figures 2 and 3 are flow diagrams for printing at a web printing system.

Figure 4 illustrates a job submission form.

Figure 5 is a flow diagram for printing at a web printing system.

Figure 6 illustrates a job status form.

### Description

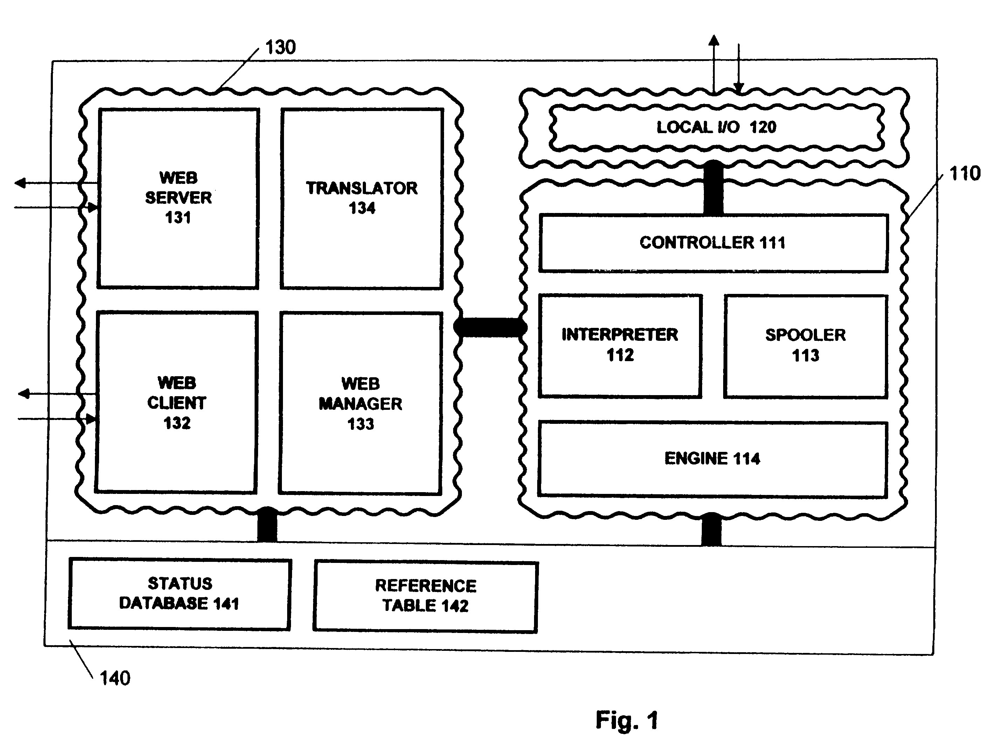

Referring to Figure 1, a web printing system 100 includes an output system 110 that may include, for example, a printer controller 111, an interpreter 112, a print spooler 113, and a printer engine 114. Typically, a web printing system 100 services both local and remote clients, and accordingly, the output system 110 is used with both a local I/O interface 120 and a remote I/O interface 130.

The output system 110 handles files after they have been properly formatted for printing and does not differentiate between files received from local and remote clients. When the output system 110 is informed that a file is ready for output, the controller 111 sends the file to the interpreter 112, and the interpreted file is sent the spooler 113 for output by the printer engine 114.

The remote I/O interface 130 of the web printing system is identified on the web by an assigned Uniform Resource Locator (URL) address, which is translated into an Internet address by a service such as the Domain Name System (DNS) (not shown).

The web printing system's remote I/O interface 130 includes a web server 131 that recognizes web communications to its URL address. The web server 131 receives and responds to such communications using the standard Hypertext Transfer Protocol (HTTP). The remote I/O interface 130 also includes a web client 132 that can initiate access to different URL addresses over the web.

The web manager 133 controls the web server 131 and the web client 132. The web manager 133 may also control a translator 134 for translating received files when necessary, and interacts with the output system 110 when a file from the remote I/O interface 130 is ready for output. The web manager 133 also manages the storage of files in a printer memory 140 during different stages of the printing process.

The web manager 133 may also access and manipulate data in a job status database 141 in printer memory 140 that maintains updated status information for print jobs at the web printing system 100.

A web printing system 100 such as is illustrated in Figure 1 is capable of various types of web communications including, for example, receiving files fcr printing, retrieving files from URL addresses for printing, and providing status information.

### 1. Printing files received over the web

A user may send a file over the web to be printed at an accessible web printing system. By configuring both the user's machine and the web printing system tc communicate using HTTP, the standard protocol for communication over the web, user and web printing system communications should be compatible.

### a. Files received through a user application

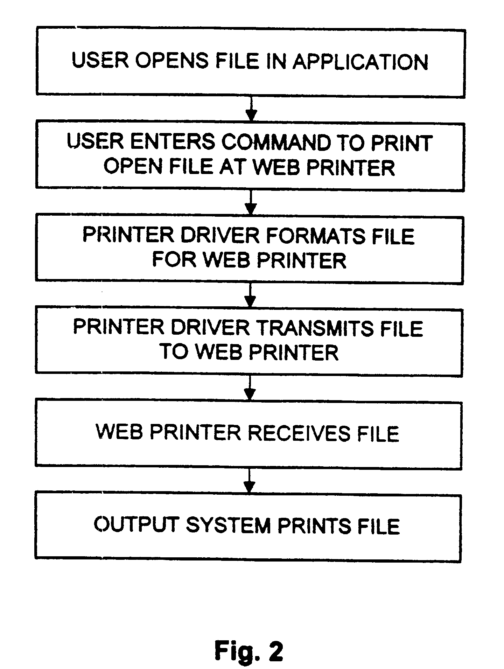

Referring to the flow diagram of Figure 2, a user may send a file to a web printing system over the web using an application. Specifically, the user launches an appropriate application and opens a file (step 210). This file may be any file, local or remote, accessible to the user. When ready to print, the user enters a command to print the file at a web printing system (step 220).

Typically, the specific web printing system is determined based on preferences previously set by the user, such as a prior selection of a default printing system for printing from the user's machine or from specific applications. Alternatively, for an open file, a user may select a specific web printing system on the fly from a list of printers provided by the application, listing both local and remote printing systems accessible to the user.

The application typically interacts with a printer driver that is preconfigured to format and transmit files for printing at specific printing systems (step 230). For example, if a selected printing system natively interprets PostScript®, the printer driver may be configured to generate a PostScript® file from the original file. When ready to print, the printer driver transmits the formatted file over the web to the URL address of the web printing system using the HTTP protocol (step 240).

The receiving web printing system receives the formatted file (step 250) through the web server 131 and stores the file in the printer memory 140 as instructed by the web manager 133. The web manager 133 is configured to recognize that the received file is formatted for printing and accordingly transfers control of the file to the output system 110, which handles the output of the file (step 260).

### b. Files received through a web browser

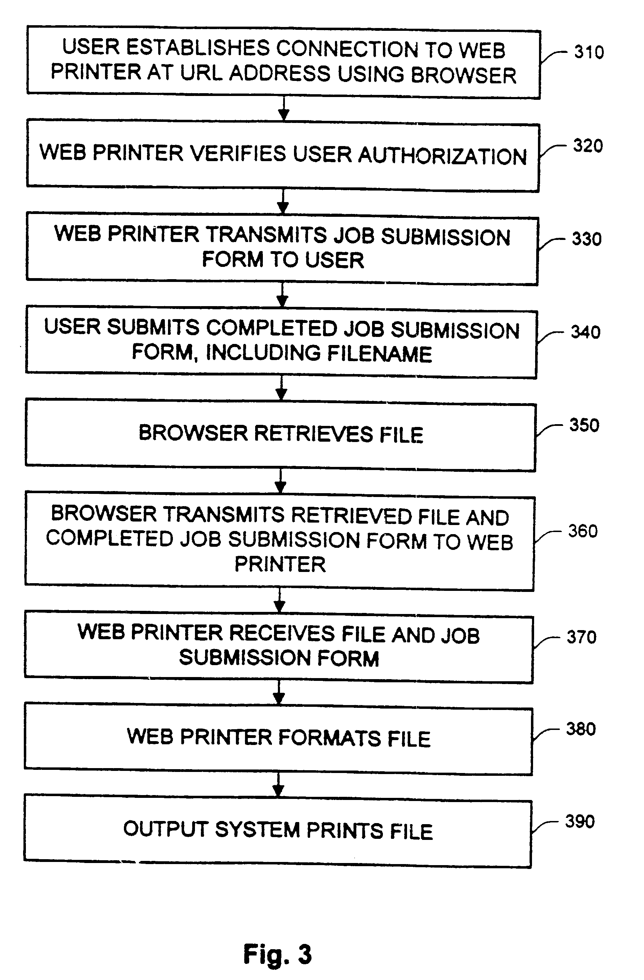

A user may also send a file to a web printing system using a web browser. With reference to Figure 3, the user opens a browser such as Netscape Navigator or Microsoft Internet Explorer and establishes a connection to a web printing system by entering its URL address (step 310).

If desired, the web printing system may be configured to verify that the user has authorized access (step 320). For example, the web printing system may require user identification and a password.

Once access is authorized or if no authorization system is used, the web printing system sends a job submission form to the user (step 330). This will typically be handled by the web server 131 under the control of the web manager 133.

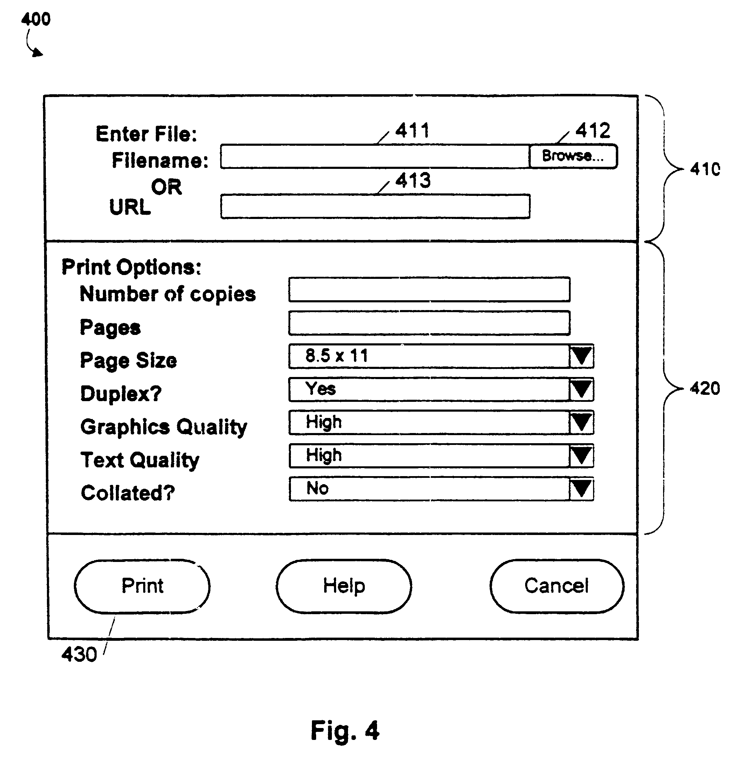

Figure 4 illustrates an example of a job submission form 400 received and displayed by the user's machine. The details of a job submission form may be adapted to the capabilities of the specific printing system and the requirements of specific applications. In this example, job submission form 400 includes a section 410 for a user to specify a file to be printed. The user sends a file to the web printing system by entering the filename of the file in box 411, either manually typing the file pathname and filename, or using a graphical user interface icon such as "browse" box 412 to open a pull-down menu listing available files. The listed files will typically include files resident on the user's disks or connected LAN.

Job submission form 400 also includes a section 420 for a user to set print options. The specific options may vary depending on the capabilities of the printing system and the requirements of specific applications. As shown in job submission form 400, possible options include the number of copies to be printed, the pages to be printed, paper size, whether the pages are to be printed in duplex, the print quality of graphics and text, and whether the printed pages are to be collated.

The user submits the completed form by selecting the "print" box 430 (step 340). The browser then retrieves the file listed in box 411 (step 350). If the file cannot be accessed, the browser returns an error message to the user. Otherwise, the browser transmits the retrieved file along with the completed form back to the web printing system using the HTTP protocol (step 360).

The receiving web printing system receives the file and the completed form (step 370). Unlike files transmitted through an application, a file transmitted through a browser may not be specifically formatted for the receiving printing system. Thus, the web printing system formats the received file (step 380) as needed.

A properly formatted file has a file format that can be natively interpreted by the output system 110 and that reflects the printing options selected by the user. The web manager 133 may determine the file format of a received file by various methods. For example, the web manager 133 may be able to derive the file format based on the file name extension or an examination of the file content.

The interpreter 112 included in the output system 110 may be customized to natively interpret some file formats, and a translator 134 may be provided to translate other specified file formats to one that can be natively interpreted.

If the file format is one that the printing system natively interprets, translation is not needed. For example, many printing systems natively interpret PostScript® files, so a PostScript® file received by the remote I/O interface 130 of such a printing system will likely not require translation. On the other hand, if the file format is not one that the printing system natively interprets but can translate to an interpretable file format, the web manager 133 may instruct the translator 134 to translate the file. If the file format is one that the web printing system can neither interpret nor translate, the web manager 133 may instruct the web server 131 to return an error message to the user.

The web manager 133 also inserts appropriate formatting codes into the file to reflect the print options set by the user in the job submission form, and informs the output system 110 that the file is ready for output (step 390).

### 2. Printing files retrieved from a URL address

In addition to sending a file for printing to a web printing system, a user can instruct the web printing system to retrieve a file for printing.

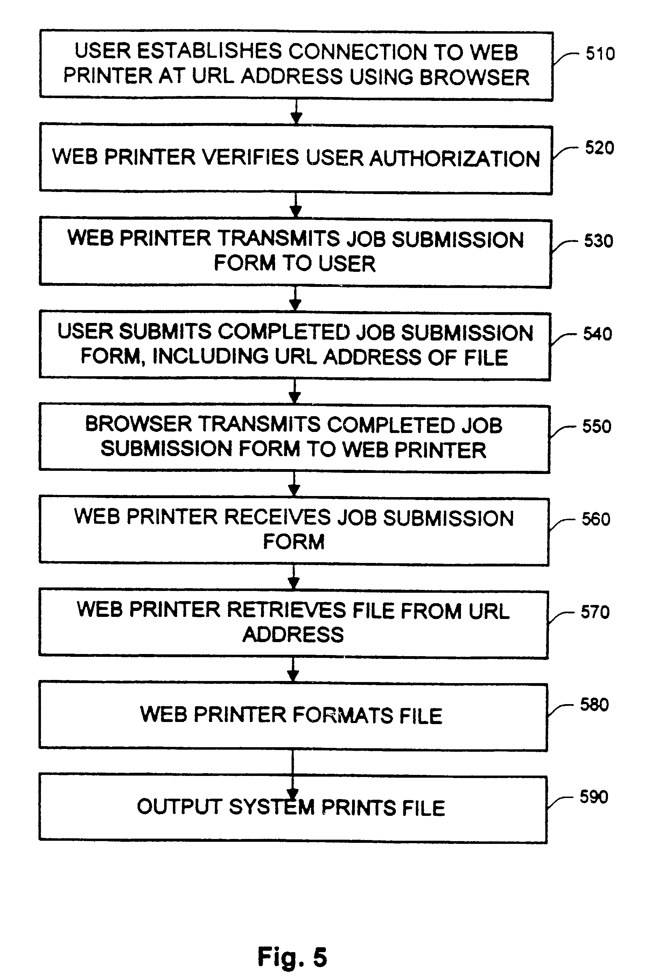

Referring to Figure 5, as with files sent using a browser as described above, the user uses a browser to establish a connection to a web printing system at a URL address (step 510). Once the connection is made and the web printing system optionally verifies that the user has authorized access (step 520), the web printing system sends a job submission form such as that illustrated in Figure 4 back to the user (step 530). However, in this case, rather than specifying a file in box 411 to be retrieved and sent to the printing system, the user specifies the URL address where the file resides in box 413. The URL address may be any address accessible by the web printing system, including local and remote addresses. The user also selects printer options, as described above, and submits the completed form (step 540) for transmission by the browser to the web printing system (step 550).

The receiving web printing system receives the job submission form with the URL address of the file to be printed (step 560). Unlike the cases previously described in which the web printing system receives the actual content of the file, the web printing system receives only the URL address of the file.

The web client 132 receives an instruction from the web manager 133 to retrieve the file (step 570) and establishes a connection over the web to the specified URL address. If the file requires that the user have authorized access, the server at the file's address may require the web client to provide an identification and password.

If the file can be accessed, the web client 132 downloads its contents to the printer memory 140. Depending on the file format, additional files may need to be retrieved. Various methods may be used to determine the file format of a retrieved file. For example, the web manager 133 may be able to determine the file format based on information provided by a server at the location of the retrieved file, the file name extension, or the file content.

If the file is, for example, a hypertext markup language (HTML) file, the file may include referenced images. When an HTML file is displayed, the referenced images are automatically displayed as if the image data were embedded in the HTML file but are implemented as references to separately stored image files. To allow the web printing system to properly print an HTML file with referenced images, the web manager 133 may instruct the web client 132 to retrieve the referenced image files as well as the base HTML file. The web client may store the files separately in the printer memory 140, maintaining a reference table 142 for correlating each referenced image file to a specific location within the base HTML file.

As with files received from a user using a browser, files retrieved by the web printing system may need to be formatted (step 580). The file formats of retrieved files are determined by the web manager 133 as discussed above and the files are translated if necessary, depending on the capabilities of the interpreter 112 and translator 134.

The interpreter 112 of a web printing system may be configured to natively interpret HTML, as well as image description languages such as JPEG (and interlaced JPEG) and GIF (and progressive GIF), which will give the web printing system the ability to output HTML files without translation. In such a case, the interpreter 112 will use the reference table 142 to retrieve the image data from the referenced image files for insertion at appropriate locations within the base HTML file.

Alternatively, the translator 134 may include applications for translating files such as HTML, JPEG and GIF files into a natively interpreted file format such as PostScript®. In this case, the translator 134 accesses the reference table 142 to retrieve the image data from the referenced image files for insertion into the base HTML file.

After verifying that a retrieved file is of a proper file format, the web manager 133 inserts appropriate formatting codes to reflect the print options set by the user in the job submission form, and informs the output system 110 that the file is ready for printing (step 590).

### 3. Providing status information

As shown in Figure 1, a web printing system maintains a status database 141 for storing status information about its print jobs. The database 141 can be adapted as needed for specific printing systems and applications. For example, the database 141 may record the status of print jobs requested only through the remote I/O interface 130, or may include all print jobs, including those requested through the local I/O interface 120 A user may be given the option to cancel a print job prior to printing, and the cancellation will also be noted in the status database 141. Other information stored in the status database 141 may vary, including information such as a list of jobs to be printed, identification of the user submitting a job, the size of the job, the time submitted, the time completed (if completed), and the present status. The present status may be, for example, receiving, retrieving, formatting, printing, cancelled, or completed. A job remains in the status database 141 from the time of its submission through its printing or cancellation; the job remains in the status database 141 after printing or cancellation for a duration that may be varied, or until deleted by the user.

Various methods may be used to provide information from the status database 141 to users. For example, the web printing system may be configured to update the status database 141 at designated steps of the printing process. The web server 131 may post a web page for status information at a separate URL address, and when contacted by users at this URL address, the web server 131 may display a standard status form providing information from the status database 141. Alternatively, the web page may be configured to allow a user to query the status database 141, in response to which the web server 131 will display a customized status form.

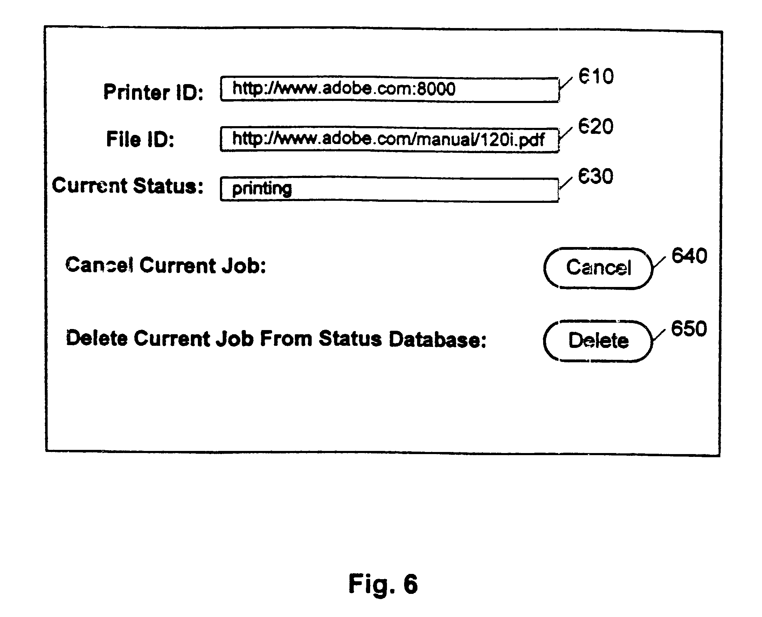

Figure 6 illustrates an example of a status form 600, including the printer ID 610, the file ID 620, and the current status 630. The status form 600 provides an option for the user to cancel the current job 640 and an option to delete the current job from the status database 650.

The invention may be implemented in digital hardware or computer software, or a combination of both. For example, referring to the printing system illustrated in Figure 1, remote I/O interface 130 may be implemented using a modem and computer programs executing on a processor. Printer memory 140 may include a hard disk sufficient for, for example, receiving files at web transmission speeds, providing random access to file formats such as PDF (Portable Document Format from Adobe System Incorporated) and allowing field upgrades to the interpreter. The memory 140 also may include ROM and/or RAM sufficient for storing translated and decompressed files.

The invention may be implemented in specially designed hardware and software, or may be installed on existing printing systems.

Other embodiments are within the scope of the following claims. The web printing system may include a local or remote printer, a raster image processor (RIP) or other output devices. The remote I/O interface 130 may reside in a physically distinct unit and be connected to the output system 110 through, for example, a LAN connection. Alternatively, the remote I/O interface 130 may be housed with the output system 110 in a single output device.

The network over which the printing system communicates may be a wide area network other than the web, in which network clients and servers are identifiable by a uniform address.

When a user transmits a file for printing from within an application, the file may be transmitted directly without being formatted by the printer driver. Instead, the receiving web printing system may format the file as needed for output.

When a user identifies a file for printing by its URL address to a web printing system, the user need not open the file. However, if desired, the client may use the browser to access the file at the specified URL address and open the file for viewing or editing in an appropriate application, and the client can print the file from within the application as described above.

A web printing system may retrieve a file at a URL address specified by a remote user over the web, or by a local user through direct or LAN connections. For example, the local I/O interface 120 in Figure 1 may be configured to understand such a request from a local user and to return a job submission form such as that illustrated in Figure 4. Once the job submission form with a specified URL address is received by the web printing system, the retrieval and printing processes described above in section II may be followed.

Communication protocols may be adapted as needed. In the above discussion, a user's machine and a web printing system communicate using HTTP, presently the standard protocol for web communications. Should this standard change, the protocol used for web printing system communications may be modified appropriately.

Methods of retrieving files may be modified to retrieve various file formats. Similarly, interpreters for interpreting various file formats and translators may be provided and/or updated as needed.

## Claims

1. A method for a user machine to communicate with a printing system over a network, comprising:
determining a URL address for a printing system; and
transmitting information to the URL address for printing a file at the printing system.

2. The method of claim 1, wherein transmitting information to the URL address for printing a file at the printing system further comprises transmitting the file.

3. The method of claim 1, further comprising opening a file in an application, wherein transmitting information to the URL address for printing a file at the printing system further comprises transmitting information for printing the opened file.

4. The method of claim 1, wherein transmitting information to the URL address for printing the file at the printing system includes transmitting formatting information.

5. The method of claim 1, further comprising using a browser for transmitting information to the URL address of the printing system.

6. The method of claim 5, further comprising using the browser to transmit a URL address for the file to be printed at the printing system.

7. The method of claim 1, further comprising:
receiving a job submission form;
specifying, in the job submission form, information for the file to be printed; and
transmitting the job submission form to the URL address of the printing system.

8. The method of claim 7, wherein the information specified in the job submission form includes file identification.

9. The method of claim 8, further comprising:
retrieving the file identified in the job submission form; and
transmitting the retrieved file to the URL address of the printing system.

10. The method of claim 8, wherein the information identifying the file identifies a URL address for the file.

11. The method of claim 1, wherein the network comprises the World Wide Web.

12. The method of claim 1, wherein the printing system comprises a housed within a single device.

13. The method of claim 1, wherein the printing system comprises a printer.

14. A method for a printing system to retrieve a file for printing, comprising:
receiving a request to print a file identified by a URL address;
retrieving the file from the URL address; and printing the file.

15. The method of claim 14, wherein receiving the request to print the file identified by a URL address further comprises:
receiving a print request from a user machine;
transmitting a job submission form to the user machine in response to the received print request; and
receiving a completed job submission form from the user machine including the URL address of a file to be printed.

16. The method of claim 14, wherein the request to print the file is received over a direct connection.

17. The method of claim 14, wherein the request to print the file is received over a local area network connection.

18. The method of claim 14, wherein the request to print the file is received over the World Wide Web.

19. The method of claim 14, wherein retrieving the file from the URL address retrieves the file over a direct connection.

20. The method of claim 14, wherein retrieving the file from the URL address retrieves the file over a local area network connection.

21. The method of claim 14, wherein retrieving the file from the URL address retrieves the file over the World Wide Web.

22. The method of claim 14, wherein the printing system comprises a single device.

23. The method of claim 14, wherein the printing system comprises a printer.

24. The method of claim 14, wherein the printing system comprises a first component for retrieving the file from the URL address and a separately housed second component for printing the file.

25. A printing system for communicating with users over a network, comprising:
a remote I/O interface including a server identified by a URL address for communicating with users over a network; and
an output system connected to the remote I/O interface, for printing files in response to communications received by the remote I/O interface.

26. The printing system of claim 25, wherein the remote I/O interface receives a file over the network, and the output system prints the received file.

27. The printing system of claim 25, wherein the remote I/O interface further includes a client for retrieving a file over the network.

28. The printing system of claim 27, wherein the output system prints files retrieved by the client.

29. The printing system of claim 27, wherein the client retrieves files in response to communications received by the remote I/O interface.

30. The printing system of claim 27, further comprising a local I/O interface, wherein the client retrieves files in response to communications received by the local I/O interface.

31. The printing system of claim 25, wherein the remote I/O interface further comprises a translator for translating files before the output system prints the file.

32. The printing system of claim 25, further comprising a status database for storing status information for the output system, wherein the remote I/O interface provides information from the status database over the network.

33. The printing system of claim 32, wherein the network is the World Wide Web (web) and the remote I/O interface provides information from the status database by posting a web page.

34. The printing system of claim 32, wherein the remote I/O interface provides information from the status database in response to a query received from a user over the network.

35. The printing system of claim 32, further comprising a local I/O interface for providing information from the status database.

36. The printing system of claim 25, wherein network over which the remote I/O interface communicates is the World Wide Web.

37. The printing system of claim 25, wherein the remote I/O interface and the output system comprise separately housed units.

38. The printing system of claim 25, wherein the remote I/O interface and the output system are comprised of a single unit.

39. The printing system of claim 25, wherein the remote I/O interface and the output system are comprised of a printer.
